# FASCICULE DE BREVET EUROPEEN

(11) **EP 0 384 839 B1**
(45) Date de publication et mention de la délivrance du brevet: **27.04.1994**
(21) Numéro de dépôt: 90400485.0
(22) Date de dépôt: 21.02.1990
(51) Int. Cl.: H01L 31/042, H01L 31/045, F24J 2/52

(54) **Capteur solaire perfectionné**
Solarkollektor
Solar collector

(30) Priorité: 23.02.1989 FR 8902329
(43) Date de publication de la demande: 29.08.1990
(73) Titulaire: GALLOIS MONTBRUN, Roger, F-75005 Paris (FR)
(72) Inventeur: GALLOIS MONTBRUN, Roger, F-75005 Paris (FR)
(74) Mandataire: Pinguet, André

(56) Documents cités:
- FR-A- 2 356 169
- FR-A- 2 461 332
- FR-A- 2 532 727
- FR-A- 2 544 551
- US-A- 4 360 182

## Description

Le capteur solaire perfectionné, objet de la présente invention, se compose de deux capteurs photovoltaïques plans, intégrés dans un dispositif à poursuite leur permettant de bien résister au vent.

### REALISATIONS ANTERIEURES A L'INVENTION

On connaît déjà des capteurs solaires plans, constitués par une structure généralement rectangulaire sur laquelle sont fixées les cellules photovoltaïques, et manoeuvrés par des mécanismes de poursuite tant en azimut qu'en site.
De tels dispositifs sont notamment décrits dans les documents FR-A-2.415.271 et FR-A-2.418.912.

De tels capteurs solaires présentent un certain nombre d'inconvénients. C'est ainsi qu'on a constaté que les capteurs plans installés dans des zones exposées au vent lui résistent mal, et que même les positions dites de sécurité - position horizontale ou verticale "en drapeau" - qui sont alors données à leurs panneaux, ne les mettent pas pour autant à l'abri des vents tourbillonnaires.

Un dispositif capteur d'énergie solaire, décrit dans le document FR-A-2.544.551, est une première tentative pour éliminer ces inconvénients.

Ce dispositif comprend un ensemble constitué par deux panneaux de forme rectangulaire allongée dans le sens horizontal, fixés sur les faces avant et arrière d'une carène en forme de toit. Seul le panneau fixé sur la face avant est utilisé comme capteur solaire; l'autre, fixé sur la face arrière, ne servant qu'à protéger l'ensemble du dispositif contre le vent.

Ce dispositif comprend également des mécanismes d'orientation en azimut destinés à maintenir le panneau avant, dont l'inclinaison reste par ailleurs fixe, face au soleil.

Un tel dispositif a notamment l'avantage de bien résister au vent, mais sa production en électricité, bien que déjà importante si on la compare à celle de la plupart des autres capteurs solaires photovoltaïques à poursuite, reste néanmoins limitée en raison du fait que ce dispositif n'a qu'un seul panneau capteur et que son inclinaison est fixe.

Aussi, reprenant l'étude du dispositif tel qu'il est décrit dans le document FR-A-2.544.551, l'inventeur s'est-il efforcé d'améliorer sa production en électricité, sans pour autant renoncer à ses avantages.

Le capteur solaire perfectionné auquel ont abouti ces recherches et qui est l'objet de la présente invention a pleinement atteint son but, puisqu'aux avantages du précédent dispositif sont venus s'en ajouter d'autres, très importants, parmi lesquels une augmentation de plus du double de sa production en électricité.

Ce nouveau capteur reprend d'abord certains éléments du précédent dispositif : sa carène notamment, toujours en forme de toit, continue à servir de support aux deux panneaux correspondant à ses faces avant et arrière et qui gardent leur forme rectangulaire allongée; elle reste également manoeuvrée par des mécanismes d'orientation en azimut, de conception et de fonctionnement comparables à ceux du précédent dispositif, et également destinés à maintenir sa face avant en direction du soleil.

### RESUME DE L'INVENTION

Le perfectionnement apporté à ce type de dispositif consiste à rendre les panneaux avant et arrière jusqu'alors fixés aux faces de la carène, inclinables, en les manoeuvrant chacun séparément par des mécanismes d'orientation identiques, ce qui permet, si on le veut, de limiter le perfectionnement du capteur à celui d'un seul panneau qui, dans ce cas, est le panneau arrière.

L'orientabilité en site donnée au panneau arrière augmente à elle seule de plus du double la production en électricité du capteur solaire, puisqu'elle transforme un panneau fixe, appliqué contre la face arrière de la carène et dont le rôle se bornait à la protéger contre le vent, en un deuxième panneau capteur, manoeuvré de manière que son inclinaison soit toujours normale aux rayons solaires.

L'orientabilité en site du panneau avant, par contre, se présente différemment, car il s'agit d'un panneau fonctionnant déjà comme capteur solaire; elle signifie seulement que ce panneau, au lieu de fonctionner avec une inclinaison fixe correspondant à sa position basse contre la face avant de la carène, se trouve désormais manoeuvré en site dans les mêmes conditions que le panneau arrière.

Le perfectionnement apporté au fonctionnement du panneau avant a donc un rôle complémentaire qui est loin d'être négligeable car il permet, non seulement d'en augmenter le rendement, mais encore de pouvoir disposer, pour la manoeuvre en site du capteur, non plus d'un seul mais de deux panneaux qui, ayant la même inclinaison, sont alignés dans un même plan, inclinable aussi bien vers l'avant, c'est-à-dire en direction de l'hémisphère sud, que vers l'arrière, c'est-à-dire en direction de l'hémisphère nord, l'intérêt de cette manoeuvre étant de permettre au capteur solaire ainsi perfectionné de suivre le soleil sous des latitudes comprises entre les tropiques, où son cours change d'hémisphères selon les saisons, et cela sans qu'il soit nécessaire de modifier l'installation de base du dispositif.

L'orientabilité en site d'un panneau, qu'il soit arrière ou avant, s'obtient en le rendant indépendant de la face-support de la carène qui lui correspond, et en lui permettant, grâce à des mécanismes appropriés, de tourner autour d'un axe de rotation aménagé le long de l'arête faîtière de la carène et sur lequel il s'articule, en gardant une inclinaison normale aux rayons solaires.

Chaque mécanisme de manoeuvre en site, décrit à titre d'exemple non limitatif, comprend notamment :
- d'une part, un dispositif de liaison composé de deux biellettes ayant un point commun d'articulation à leurs extrémités inférieures, tandis que leurs extrémités supérieures sont articulées, l'une sur la structure fixe de la face avant de la carène, l'autre sur celle du panneau orientable;
- d'autre part, un vérin hydraulique articulé, à la base de son corps sur la structure fixe de la face avant de la carène, et à l'extrémité de sa tige sur le point commun d'articulation des deux biellettes.

Le vérin et les biellettes sont montés dans un plan vertical où leurs articulations leur permettent de manoeuvrer.

Outre le perfectionnement principal précédemment décrit qu'il apporte à ses panneaux, ce nouveau dispositif en présente d'autres valant la peine d'être mentionnés, concernant notamment le support de sa carène et le moteur de ses mécanismes d'orientation en azimut.
- Le support de sa carène est en contact avec le chemin de roulement au moyen de mécanismes de roulement et de blocage. Leur nombre, qui était de quatre dans le précèdent dispositif, a été réduit à trois afin d'améliorer la stabilité du support qui, avec ses trois bras renforcés par des barres de contreventement, prend ainsi la forme d'un triangle équilatéral.
- De même, en ce qui concerne le moteur qui par une roue dentée engrène une crémaillère disposée sur la paroi interne du chemin de roulement, ou qui opère par friction exercée sur cette paroi, une amélioration a été apportée à son emplacement, car il est maintenant monté à l'intérieur de la carène où il est mieux protégé, au lieu de l'être à l'extérieur comme dans le précédent dispositif.

### DESCRIPTION SUCCINCTE DES DESSINS

La description qui va suivre et qui ne présente aucun caractère limitatif doit être lue en regard des figures annexées.

Figure 1 - Elle représente de façon schématique deux perspectives axonométriques du capteur solaire, perfectionné selon la présente invention; dans celle de droite, le capteur a ses panneaux avant et arrière repliés sur la carène; dans celle de gauche, son panneau est en position relevée.

Figure 2 - Elle représente une vue en plan du capteur solaire, au niveau du cadre qui porte la carène. La carène ainsi que les panneaux garnis de cellules photovoltaïques, situés au-dessus de ce niveau, sont indiqués en pointillés.

Figure 3 - Elle représente une coupe schématique, faite dans le plan III-III de la figure 2, de l'un des dispositifs de roulement et de blocage qui font partie des mécanismes d'orientation en azimut permettant à la carène, manoeuvrée autour de son axe vertical de rotation, de maintenir son panneau avant face au soleil.

Figure 4 - Elle représente une perspective axonométrique du capteur vu de l'arrière, donnant de façon schématique un exemple non limitatif de mécanismes d'orientation en site du panneau arrière.

Figure 5 - Elle représente une coupe schématique du capteur faite dans le plan V-V de la figure 2, où sont respectivement indiquées, en traits pleins, la position des mécanismes de manoeuvre du panneau arrière, quand ce dernier est appliqué contre la face arrière de la carène, et en traits pointillés, les nouvelles positions prises par ces mêmes mécanismes et le panneau, après la manoeuvre.

Figure 6 - Elle représente la même coupe schématique du capteur que celle de la figure 5, mais combinée avec une perspective axonométrique permettant de mieux distinguer l'un de l'autre les deux plans verticaux dans lesquels opèrent les mécanismes assurant respectivement la manoeuvre de chacun des deux panneaux.

Figure 7 - Elle reproduit le dessin de la figure 6, mais dans laquelle les panneaux avant et arrière, actionnés par leurs mécanismes respectifs, ont pris de part et d'autre de leur axe de rotation commun une même inclinaison, et sont alignés par conséquent dans un même plan normal aux rayons solaires.

Figure 8 - Elle représente une vue en coupe d'un bâtiment équipé d'un capteur solaire selon l'invention, avec un exemple différent de mécanismes pour la manoeuvre en site des panneaux capteurs.

### DESCRIPTION DETAILLEE

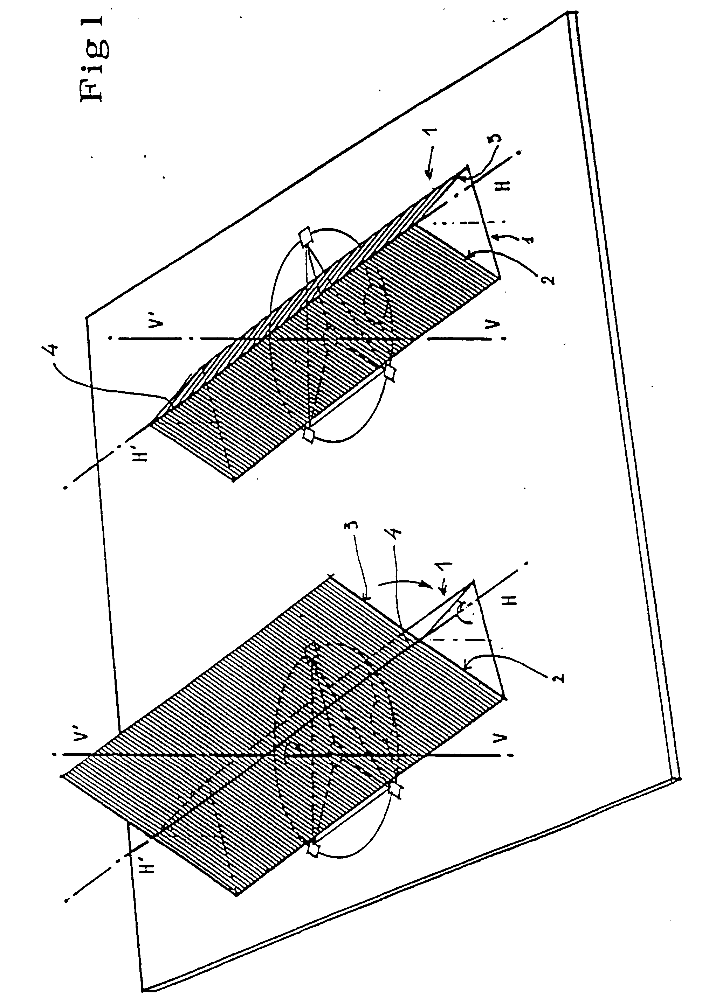

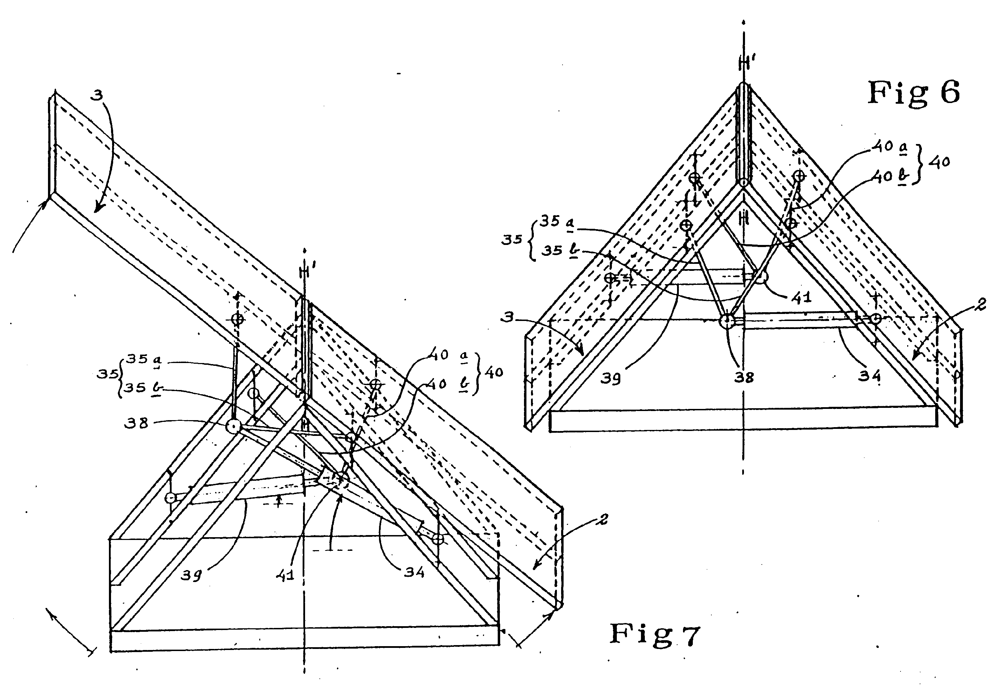

Pour simplifier les dessins, et puisque la manoeuvre de l'un ou l'autre des deux panneaux s'effectue séparément et au moyen de mécanismes identiques, la manoeuvre en site du capteur a été limitée, dans les figures 1, 4 et 5, à celle du panneau arrière - le panneau avant étant alors considéré comme fixe - et ce n'est que dans les figures 6 et 7 qu'elle se trouve appliquée à l'ensemble des deux panneaux.

Figures 1, 2, 3, 4 - Ainsi qu'on peut le voir, notamment sur les figures 1, 2 et 4, le capteur solaire, perfectionné selon la présente invention, comprend une carène (1) en forme de toit dont les faces avant et arrière, de forme rectangulaire allongée, servent respectivement de supports à un panneau avant (2) et un panneau arrière (3), dont on a fait coïncider les bords longitudinaux supérieurs, pour schématiser, avec l'arête faîtière (HH') de la carène (1). les panneaux avant (2) et arrière (3) ont chacun une structure constituée par un cadre rectangulaire comprenant des longerons (6), des traverses (7) et des traverses intermédiaires (8, 9). C'est sur cette structure que sont montés les modules photovoltaïques ou autres moyens de captage solaire. La structure de la carène (1) est constituée par un certain nombre de fermes (10). Celles situées à chaque extrémité de la carène (1) sont obturées par des panneaux triangulaires (11) destinés à empêcher le vent de s'y engouffrer et de nuire au bon fonctionnement du capteur. Ces fermes, dont l'inclinaison varie selon la latitude du lieu d'installation du capteur, sont contreventées par les cadres constituant l'ossature des faces de la carène (1).
La carène repose sur un support (12) comportant en son centre une pièce cylindrique (17) sur laquelle se trouve fixé l'axe de rotation vertical (VV') qui assure le centrage de l'ensemble mobile sans en supporter le poids. L'axe de rotation (VV') a été prévu solidaire de l'ensemble mobile afin de pouvoir compléter ou même remplacer, par une manoeuvre manuelle, le fonctionnement automatique de cet ensemble mobile.

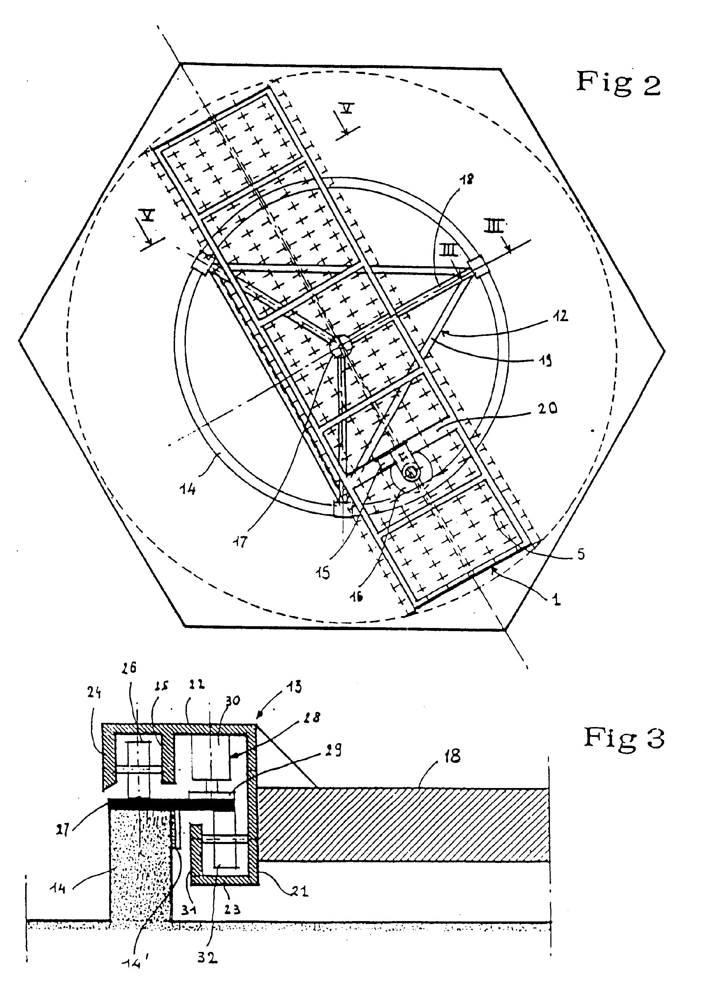

De la pièce cylindrique 17 partent trois bras 18, renforcés à leurs extrémités par trois barres de contreventement 19 donnant au support la forme d'un triangle équilatéral. A chaque sommet de ce triangle, constitué par deux barres de contreventement enserrant entre elles l'un des bras 18, se trouve solidement fixé un mécanisme de roulement et de blocage, dont la description sera faite plus loin. Grâce à ces trois mécanismes, l'ensemble mobile, bien équilibré, se déplace ou s'arrête sur un chemein de roulement circulaire 14. L'entraînement en rotation de l'ensemble mobile est assuré par un moteur 15, de préférence électrique, monté sur une traverse intermédiaire (20) prévue entre les longerons du cadre rectangulaire constituant la base de la carène (1). Ce moteur (15) est en contact, par l'intermédiaire d'une roue (16) avec la paroi interne du chemin de roulement circulaire 14, contact qui peut s'opérer par simple friction ou par engrenage entre la roue, qui est alors dentée, et une crémaillère (14') solidaire du chemin de roulement (14).
Un mécanisme de roulement et de blocage (13), tel qu'il est représenté sur la figure 3 à titre d'exemple non limitatif, comprend un support vertical (21) constitué par un plaque métallique, fixée à l'extrémité d'un bras (18) et se raccordant, en partie haute, à une plaque horizontale supérieure (22) et, en partie basse, à une plaque horizontale inférieure (23), de manière à constituer une structure en "U".
La plaque supérieure (22) comporte en sous-face 2 séparations verticales (24) et (25), délimitant deux compartiments en "U". Le compartiment situé le plus à l'extérieur contient un galet libre (26) dont l'axe de rotation est fixé sur les séparations (24) et (25). Ce galet repose sur une couronne métallique (27) coiffant le chemin de roulement circulaire (14) qu'elle déborde vers l'intérieur. L'autre compartiment contient, à l'aplomb de la partie débordante de la couronne (27), un mécanisme de freinage 28 comprenant un patin de frein (29) et un dispositif du type électro-mécanique (30) qui l'actionne. Quant à la plaque inférieure (23) elle comporte une séparation verticale (31) disposée de manière à former, avec le support vertical (21) et la plaque inférieure (23) un troisième compartiment en "U" contenant un autre galet libre (32) dont l'axe de rotation est fixé sur le support vertical (21) et la séparation verticale (31). Ce galet est en contact avec la sous-face de la partie débordante de la couronne métallique (27). Tandis que le galet (26) supporte le poids de l'ensemble mobile, le galet (32) s'oppose à son soulèvement et exerce aussi la contreforce nécessaire à la pression du patin du frein (29).
La mise en fonctionnement du moteur (15) entraîne automatiquement le dégagement du patin du frein (29) par rapport à la couronne (27): l'ensemble mobile peut alors tourner. Inversement, dès que le moteur 15 s'arrête, le patin de frein (29) entre automatiquement en action et entraîne un blocage sur la couronne (27).
Ce blocage automatique intervient également dès que le vent se met à souffler avec une force excessive, détectée par un appareil approprié relié au dispositif actionnant le patin de frein (29), ou qu'il se met à tourbillonner, car il risque alors, si le moteur continue à fonctionner, de gêner la rotation de l'ensemble mobile.
En principe le moteur (15), de préférence commandé par un microprocesseur, fonctionne en discontinu pendant la journée pour assurer la rotation de l'ensemble mobile d'est en ouest, et en continu en fin de journée pour le ramener d'ouest en est à sa position matinale, face au soleil levant.
Ce fonctionnement de principe du moteur (15) peut se trouver modifié dans certains cas.
Ainsi par exemple, dans les zones tropicales, quand le soleil est passé de l'hémisphère sud à l'hémisphère nord, ses rayons sont captés par le panneau arrière (3), incliné en direction de l'hémisphère nord, et prolongé par le panneau avant (2) s'il est également orientable en site. A mesure que le soleil se déplace d'est en ouest dans l'hémisphère nord, la carène (1), dont la face avant au départ est tournée vers l'ouest, effectue une rotation d'ouest en est, en sens inverse de celle précédemment décrite quand le soleil se déplace dans l'hémisphère sud, ce qui amène le moteur à fonctionner, pendant la journée, en discontinu d'ouest en est et, en fin de journée, en continu d'est en ouest.

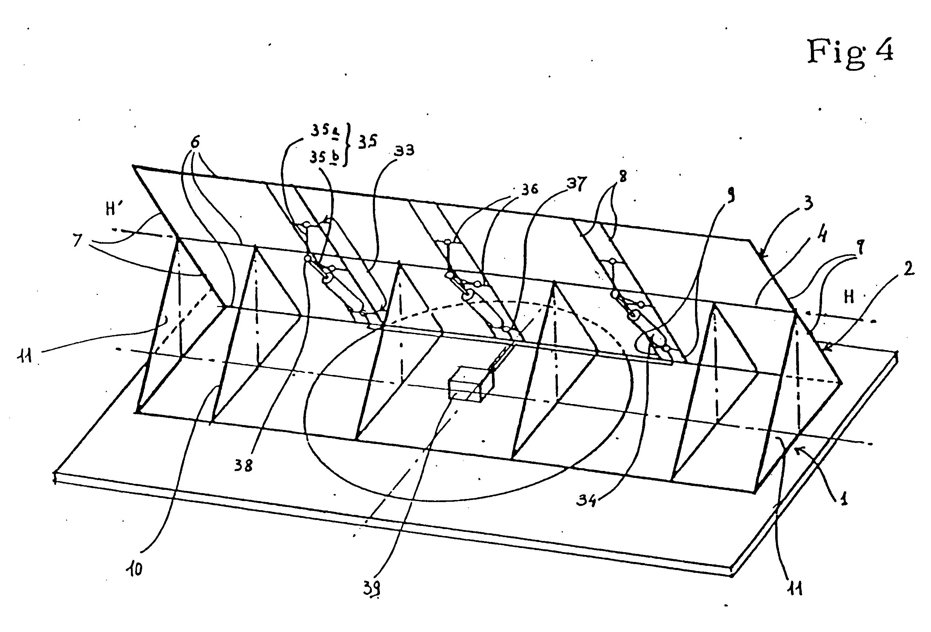

Sur la Figure 4, dans le présent exemple non limitatif de de réalisation, les mécanismes d'orientation en site qui, pour la clarté du dessin, ont été limités à la manoeuvre du panneau arrière (3), comprennent trois ensembles identiques (33) montés à l'intérieur et le long de la carène (1), dont l'un est situé au centre et par rapport auquel les deux autres sont symétriquement placés.
Chaque ensemble (33) est constitué par un vérin hydraulique (34) et d'un dispositif de liaison (35) composé de deux biellettes (35a, 35b), sensiblement de même longueur et articulées entre elles à l'une de leurs extrémités, tandis que leurs extrémités opposées le sont respectivement, la biellette (35b) sur la structure fixe de la face avant de la carène (1), la biellette (35a) sur celle du panneau arrière (3), manoeuvrable autour de son axe de rotation horizontal (HH'). Dans les deux cas, les articulations sont montées sur des entretoises (36), prévues entre les traverses intermédiaires (8) du panneau arrière (3) et celles (9) de la face avant de la carène (1). Le corps de chaque vérin hydraulique (34) est articulé à sa base sur la structure fixe de la face avant de la carène (1), cette articulation étant montée sur une entretoise (37) prévue entre les traverses intermédiaires (9), tandis que l'extrémité de sa tige l'est sur le point commun d'articulation des biellettes (35a, 35b). Les trois vérins hydrauliques (34) sont reliés à une centrale hydraulique (39), prévue à l'intérieur de la carène (1) au niveau de sa base.

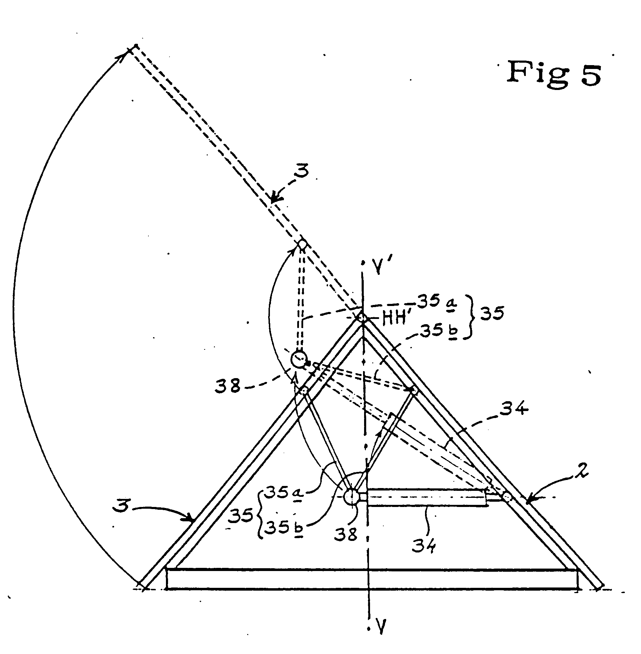

Figure 5 - Elle représente, en traits pleins, le panneau arrière (3) devenu orientable en site dans sa position de sécurité, contre la face arrière de la carène (1). A cette position du panneau arrière (3) correspondent celles, également indiquées en traits pleins, de ses mécanismes d'orientation en site, c'est-à-dire le vérin (34), les biellettes (35a, 35b) et le point d'articulation (38) qu'ils ont en commun. Sous la poussée des tiges des trois vérins (34) qui se sont déployées, le panneau arrière (3), effectuant une rotation autour de l'axe (HH') confondu avec l'arête faîtière de la carène (1), a pris une nouvelle position, indiquée en pointillés, lui permettant de fonctionner comme capteur solaire. A cette nouvelle position du panneau arrière (3) correspondent celles, également indiquées en pointillés, prises respectivement par le vérin (34), les biellettes (35a, 35b) et le point d'articulation (38) qu'ils ont en commun.

Figure 6 - Elle reprend la coupe du capteur solaire, telle qu'elle est représentée sur la figure 5, mais complétée par une perspective axonométrique, afin de pouvoir mieux distinguer l'un de l'autre les plans verticaux dans lesquels manoeuvrent respectivement les mécanismes propres à chacun des panneaux avant 2 et arrière 3. Ces panneaux sont représentés en position basse dite de sécurité, contre les faces avant et arrière de la carène 1 qui leur correspondent; leurs mécanismes respectifs sont montés en regard l'un de l'autre et, pour leur permettre de fonctionner sans se gêner, leurs plans verticaux de manoeuvre sont légèrement décalés l'un par rapport à l'autre.
Les mécanismes d'orientation en site du panneau arrière (3) étant identiques à ceux représentés sur la figure 5 conservent dans cette figure leurs notations dans la figure 5, tandis que celles des mécanismes de manoeuvre du panneau avant (2) sont les suivantes : vérin hydraulique (39), biellettes (40a, 40b), point d'articulation commun aux deux biellettes et à la tige du vérin (41).
Les pièces constituant ces mécanismes sont représentées sur la figure 6 dans des positions qui correspondent à celles des panneaux avant (2) et arrière (3), décrites plus haut.

Figure 7 - Dans cette figure les panneaux avant (2) et arrière (3), manoeuvrés par leurs mécanismes respectifs autour de leur axe commun de rotation de manière à ce qu'ils aient la même inclinaison, sont alignés dans un même plan. Comme on peut s'en rendre compte sur la figure, ce plan de captage solaire peut basculer suivant l'axe (HH') et prendre toute inclinaison comprise entre la position basse du panneau avant (2) et celle du panneau arrière (3), positions d'ailleurs que ces panneaux reprennent l'un et l'autre automatiquement quand la force du vent menace la sécurité du capteur solaire.

Les panneaux ainsi que les éléments de leurs mécanismes respectifs conservent, dans leurs nouvelles positions représentées dans la figure 7, leurs notations dans la figure 6.

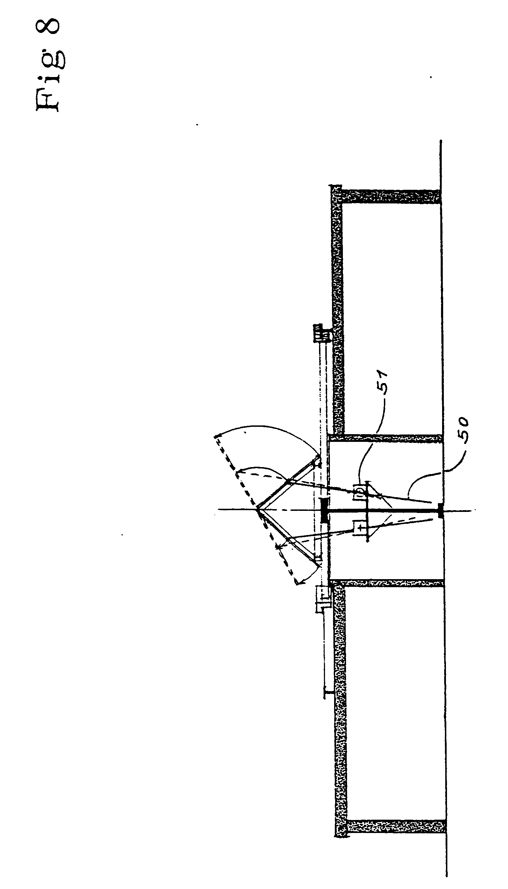

Il convient de rappeler que ces mécanismes de manoeuvre des panneaux avant (2) et arrière (3) qui viennent d'être décrits ne l'ont été qu'à titre d'exemples, et que les deux panneaux peuvent être également manoeuvrés par d'autres types de mécanismes, comme celui qui est proposé dans la figure 8.

Figure 8 - Elle représente un système différent d'orientation en site des panneaux avant (2) et arrière (3) qui sont manoeuvrés par des mécanismes indépendants et identiques, chacun de ces mécanismes étant composé d'une tige filetée (50), articulée sur le panneau au moyen d'un dispositif triangulaire horizontalement allongé, la tige étant actionnée par un petit moteur électrique (51) logé à l'intérieur de la carène (1).

En ce qui concerne la carène (1), il est toujours possible et parfois utile d'apporter des modifications à certains éléments de sa structure décrite plus haut.

A titre d'exemple, non représenté sur les figures ci-dessus décrites, l'arête faîtière (HH') de la carène (1), coïncidant avec l'axe horizontal de rotation commun aux panneaux avant (2) et arrière (3), peut être remplacée par un méplat plein ou ajouré de même longueur, entraînant le dédoublement de l'axe de rotation (HH') en deux axes parallèles assurant chacun la rotation d'un panneau.
Quand, dans cet exemple, les panneaux avant (2) et arrière (3), manoeuvrés par leurs mécanismes respectifs, prennent la même inclinaison, ils sont dans des plans parallèles qui ne se confondent que lorsqu'ils sont horizontaux.

## Revendications

1. Dispositif de capteur solaire comprenant une carène (1) en forme de toit, résistant bien au vent, avec une arête faîtière (HH') et dont les deux faces avant et arrière, de forme rectangulaire allongée, servent respectivement de supports à un panneau avant (2) et un panneau arrière (3) de mêmes dimensions que les faces de la carène (1) et dont les bords longitudinaux supérieurs coincïdent avec son arête faîtière horizontale (HH'), ledit panneau avant (2), sur lequel sont montés des cellules photovoltaïques ou autres moyens de capter l'énergie solaire, étant utilisé comme un capteur solaire plan dont l'inclinaison, fixe, correspond à la pente de la face avant de la carène (1), ladite carène (1) formant avec son support un ensemble qui, grâce à des dispositifs appropriés, peut tourner autour de son axe vertical (VV') et, manoeuvré par des mécanismes de poursuite en azimut, peut maintenir son panneau avant (2), sur lequel est monté le capteur solaire, face au soleil; ledit capteur solaire étant caractérisé en ce que le panneau arrière (3) est un deuxième capteur solaire ayant la même surface de captage que celle du panneau avant (2), ce panneau (3) étant indépendant de la face arrière de la carène (1) et capable de tourner autour d'un axe horizontal (HH') coïncidant avec l'arête faîtière de la carène (1) sur lequel il est articulé, tout en conservant, grâce à des mécanismes de poursuite en site, une inclinaison toujours normale aux rayons solaires.

2. Capteur solaire, selon la revendication 1, dont le panneau avant (2) est également orientable en site dans des conditions identiques à celles du panneau arrière (3).

3. Capteur solaire, selon les revendications 1 et 2, incluant, pour manoeuvrer en inclinaison les panneaux avant (2) et arrière (3), des mécanismes indépendants identiques, chaque mécanisme comprenant un vérin hydraulique (34, 39), dont le corps est articulé à sa base sur la face de la carène (1) opposée au panneau à manoeuvrer, et l'extrémité de sa tige sur un dispositif de liaison (35, 40) constitué par 2 bielletes (35a, 35b, 40a, 40b), dont les extrémités opposées sont respectivement articulées sur le panneau à manoeuvrer et sur la même face de la carène (1) que celle sur laquelle est articulé le vérin (34, 39).

4. Capteur solaire, selon la revendication 1 ou 2, dont les panneaux avant (2) et arrière (3) sont manoeuvrés en inclinaison par un de mécanisme comprenant une tige filetée (50), articulée sur le panneau à manoeuvrer et actionné par un petit moteur électrique (51).

5. Capteur solaire, selon l'une des revendications 2, 3 ou 4, dont les panneaux avant (2) et arrière (3) peuvent être manoeuvrés en inclinaison par une action conjuguée de leurs mécanismes respectifs (34, 39) de façon qu'ils soient toujours dans un même plan, ledit plan étant alors inclinable autour de son axe horizontal de rotation (HH'), aussi bien vers l'avant que vers l'arrière.

## Patentansprüche

1. Sonnenkollektorvorrichtung mit einem windfesten dachförmigen Tragkörper (1) mit einer Firstkante (HH') und Vorder- bzw. Rückfläche länglicher Rechteckform, die als Träger für eine vordere Tafel (2) bzw. eine hintere Tafel (3) gleicher Abmessungen wie die Flächen des Tragkörpers (1) dienen, wobei die oberen Längsränder mit seiner waagrechten Firstkante (HH') zusammenfallen, wobei die vordere Tafel (2), auf der photovoltaische Zellen oder andere Mittel zum Auffangen von Sonnenenergie montiert sind, als ebener Sonnenkollektor verwendet wird, dessen feste Schrägstellung der Neigung der vorderen Fläche des Tragkörpers (1) entspricht, wobei der Tragkörper (1) mit seinem Träger eine Einheit bildet, die aufgrund von entsprechenden Vorrichtungen um ihre senkrechte Achse (VV') drehen kann, und, betätigt durch Azimut-Verfolgungsmechanismen, ihre vordere Tafel (2), auf die der Sonnenkollektor montiert ist, zur Sonne hin gerichtet halten kann, wobei der Sonnenkollektor dadurch gekennzeichnet ist, daß die hintere Tafel (3) ein zweiter Sonnenkollektor ist, der die gleiche Auffangoberfläche wie die vordere Tafel (2) hat, wobei diese Tafel (3) unabhängig von der hinteren Fläche des Tragkörpers (1) ist und um eine waagrechte Achse (HH') drehen kann, die mit der Firstkante des Tragkörpers (1) zusammenfällt, an die sie angelenkt ist und gleichzeitig aufgrund von Elevations-Verfolgungsmechanismen eine immer zu den Sonnenstrahlen senkrechte Schrägstellung beibehält.

2. Sonnenkollektor nach Anspruch 1, dessen vordere Tafel (2) ebenfalls unter identischen Bedingungen wie die hintere Tafel (3) in Elevationsrichtung ausrichtbar ist.

3. Sonnenkollektor nach den Ansprüchen 1 und 2, der zur Schrägstellung der vorderen (2) und hinteren Tafel (3) unabhängige identische Mechanismen aufweist, wobei jeder Mechanismus einen Hydraulikzylinder (34, 39) enthält, dessen Körper an seiner Basis an die Fläche des Tragkörpers (1), die der zu betätigenden Tafel entgegengesetzt liegt, und das Ende seiner Stange an eine Verbindungsvorrichtung (35, 40) angelenkt ist, die aus zwei Schwingarmen (35a, 35b; 40a, 40b) besteht, von denen die entgegengesetzten Enden je an die zu betätigende Tafel und an die gleiche Fläche des Tragkörpers (1) angelenkt sind, wie die, an die der Zylinder (34, 39) angelenkt ist.

4. Sonnenkollektor nach Anspruch 1 oder 2, dessen vordere (2) und hintere Tafel (3) in der Schrägstellung von einem Mechanismus betätigt werden, der eine Gewindestange (50) aufweist, die an die zu betätigende Tafel angelenkt ist und von einem kleinen elektrischen Motor (51) betätigt wird.

5. Sonnenkollektor nach einem der Ansprüche 2, 3 oder 4, dessen vordere (2) und hintere Tafel (3) in Schrägstellung durch eine konjugierte Betätigung ihrer jeweiligen Mechanismen (34, 39) betätigt werden können, derart, daß sie sich immer in der gleichen Ebene befinden, wobei diese Ebene dann um ihre waagrechte Drehachse (HH') geneigt werden kann, sowohl nach vorne als auch nach hinten.

## Claims

1. A solar collector device comprising a roof-shaped hull (1) offering good wind resistance with an apical ridge (HH'), the two front and rear faces of which, of elongated rectangular form, serve respectively as supports for a front panel (2) and a rear panel (3) of the same dimensions as the faces of the hull (1), and the upper longitudinal edges of which are coincident with its horizontal apical ridge (HH'), said front panel (2), on which photovoltaic cells or other means for collecting solar energy are mounted, being used as a plane solar collector, the fixed inclination of which corresponds to the gradient of the front face of the hull (1), said hull (1) forming, together with its support, an assembly which, by means of appropriate devices, can rotate around its vertical axis (VV') and, manoeuvred by azimuth tracking mechanisms, can keep its front panel (2), on which the solar collector is mounted, facing the sun; said solar collector being characterised in that the rear panel (3) is a second solar collector having the same collecting area as that of the front panel (2), this panel (3) being free of the rear face of the hull (1) and being capable of rotating around a horizontal axis (HH') coincident with the apical ridge of the hull (1) to which it is articulated while retaining, by means of elevation angle tracking mechanisms, an inclination which is always normal to the rays of the sun.

2. A solar collector, according to Claim 1, the front panel (2) of which is also capable of being oriented as to its elevation angle in conditions identical to those of the rear panel (3).

3. A solar collector, according to Claims 1 and 2, including identical independent mechanisms for manoeuvring the inclination of the front (2) and rear (3) panels, each mechanism comprising a hydraulic jack (34, 39), the body of which is articulated at its base to the face of the hull (1) opposite the panel to be manoeuvred, and the extremity of its rod to a connecting device (35, 40), constituted by two connecting rods (35a, 35b, 40a, 40b), the opposite extremities of which are respectively articulated to the panel to be manoeuvred and to the same face of the hull (1) as that to which the jack (34, 39) is articulated.

4. A solar collector, according to Claim 1 or 2, the front (2) and rear (3) panels of which are manoeuvred as to their inclination by a mechanism comprising a threaded rod (50), articulated to the panel to be manoeuvred and activated by a small electric motor (51).

5. A solar collector, according to one of Claims 2, 3 or 4, the front (2) and rear (3) panels of which can be manoeuvred as to their inclination by a combined action of their respective mechanisms (34, 39) such that they are always in the same plane, said plane then being capable of tilting around its horizontal axis of rotation (HH'), both forwards and backwards.
